# FASCICULE DE BREVET EUROPEEN

(11) **EP 1 904 766 B1**
(45) Date de publication et mention de la délivrance du brevet: **23.12.2009**
(21) Numéro de dépôt: 06778933.9
(22) Date de dépôt: 14.06.2006
(51) Int. Cl.: F16H 63/48, F16H 48/08, F16H 57/08

(54) **DISPOSITIF DE VERROUILLAGE D'UNE TRANSMISSION DE VEHICULE ET PROCEDE DE FABRICATION CORRESPONDANT**
VORRICHTUNG ZUM SPERREN EINES FAHRZEUGGETRIEBES UND ENTSPRECHENDES HERSTELLUNGSVERFAHREN
DEVICE FOR LOCKING A VEHICLE TRANSMISSION AND CORRESPONDING MANUFACTURING METHOD

(30) Priorité: 21.07.2005 FR 0552265
(43) Date de publication de la demande: 02.04.2008
(73) Titulaire: RENAULT S.A.S., 92100 Boulogne Billancourt (FR)
(72) Inventeur: BUANNEC, Michel, F-78480 Verneuil Sur Seine (FR); CLOUD, Philippe, F-92500 Rueil Malmaison (FR)
(86) Numéro de dépôt international: PCT/FR2006/050555
(87) Numéro de publication internationale: WO 2007/010151

(56) Documents cités:
- DE-A1- 10 244 395
- FR-A- 2 801 010
- US-A- 4 369 867
- US-A- 5 170 869
- US-A1- 2005 130 795
- US-A1- 2005 137 047

## Description

La présente invention concerne le verrouillage d'une transmission de véhicule du type f rein de parking, comportant une roue de parking dentée reliée aux roues motrices du véhicule par un élément de la transmission, et un doigt de blocage pivotant pouvant s'engager entre deux dent s consécutives de la roue de parking, pour immobiliser les roues motrices par l'intermédiaire de celle-ci.

Cette invention trouve une applicat ion privilégiée, mais non limit at ive, sur une transmission automatique à trains épicycloïdaux, ou sur une transmission à engrenages automatisée.

Tout véhicule doit pouvoir être immobilisé indépendamment du frein à main. Avec une transmission manuelle à engrenages, cette immobilisation est obtenue en bloquant la transmission par l'engagement manuel d'une vitesse au moyen du levier de vitesse. En l'absence de véritable levier de changement de vitesse, c'est-à-dire en l'absence de liaison mécanique directe entre le levier ou le sélecteur du conducteur et la boîte, on utilise des systèmes de « frein de parking comprenant généralement une pièce rotative, ou roue de parking, en sortie de transmission, et un doigt pivotant capable d'immobiliser en rotation la roue de parking et la transmission.

Selon une disposit ion classique, illustrée par la publication FR 2664957, la roue de parking est montée en sortie d'un train épicycloïdal de la boîte. En l'absence de train épicycloïdal, notamment dans le cas des boîtes de vitesses à engrenages automatisées, il est nécessaire de trouver d'autres emplacements, sur des pièces tournantes de la transmission. La publication DE 102 44 395 propose à ce sujet, d'intégrer la roue de parking sur le différentiel, en usinant directement une série de dentures sur le boîtier. Outre les difficultés de fabrication, cette solution présenté comme inconvénient majeur d'être très contraignante, puisque tout nouveau dimensionnement de la roue de parking, implique obligatoirement la réalisation d'un nouveau boîtier de différentiel. La publication US 2005/0 137 047 décrit un dispositif et un procédé selon les préambules des revendications indépendantes 1 et 8.

La présente invention a pour but de faciliter la fabrication et l'adaptation d'un dispositif de verrouillage à tout type de transmission.

Dans ce but, elle propose d'intégrer la roue de parking dans la couronne du différentiel.

Selon un premier mode de réalisation, le pignon d'attaque de la couronne de dif f érent iel est monté à l'intérieur des roulements de l'arbre portant ce pignon.

Selon un second mode de réalisation, le pignon d'attaque de la couronne de différentiel est monté à l'extérieur des roulements de l'arbre portant ce pignon.

D'autres caractéristiques et avantages de la présente invention ressort iront clairement de la description suivante d'un mode de réalisation non limitatif de celle-ci, en se reportant aux dessins annexés, sur lesquels :

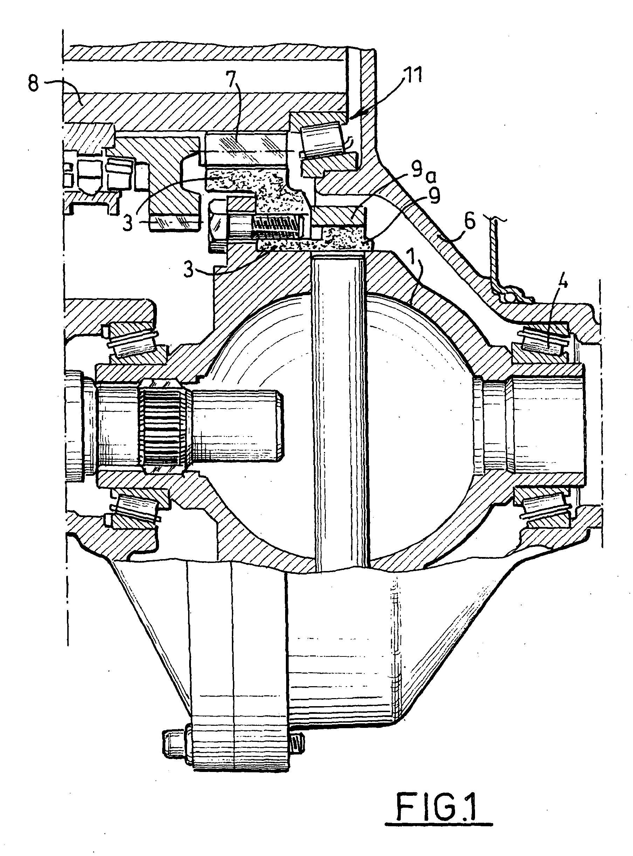

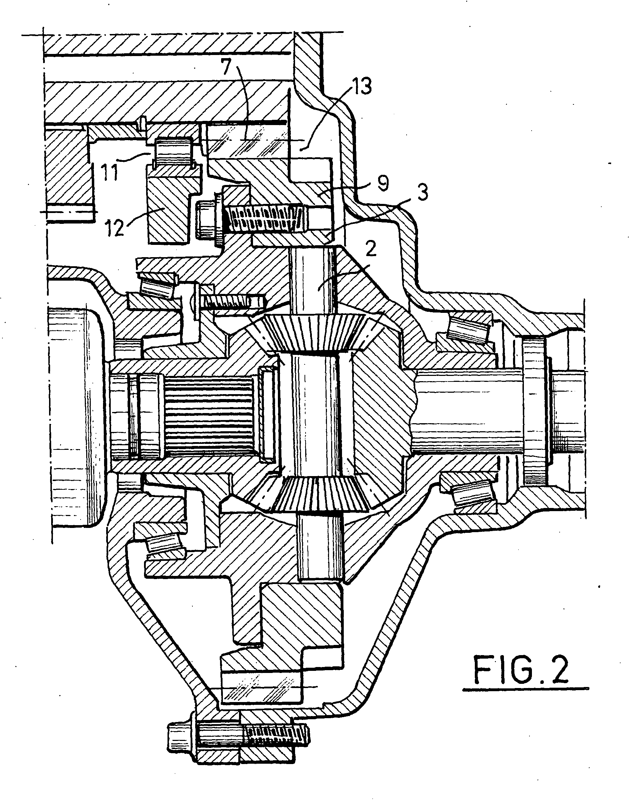

- les figures 1 et 2 illustrent deux modes de réalisation de l'invention.

Sur les figures, on a représenté un boîtier de différentiel 1 de transmission, avec son axe porte satellites 2 et sa couronne 3. Le boîtier est supporté par des roulements 4, dans le carter d'embrayage 6 de la transmission. La couronne 3 est en prise avec un pignon d'attaque de différentiel 7, porté par un arbre secondaire 8 de la boîte de vitesses.

La transmission concernée présente en effet au moins deux arbres parallèles, dont un arbre primaire et un arbre secondaire 8, supportant une pluralité de pignons, dont un pignon d'attaque 7 de la couronne de différentiel. Cette transmission peut-être une transmission dite « twinclutch », comprenant deux embrayages d'entrée reliés à deux arbres primaires concentriques, et deux arbres secondaires. Toutefois ces applications ne sont pas limitatives, et, de façon générale, l'invention s'applique à tout type de transmission manuelle ou robotisée à arbres parallèles et engrenages, ou automatique à un ou plusieurs trains épicycloïdaux.

Conformément à l'invention, la roue de parking 9 est intégrée dans une couronne de différentiel 3 de tout type de transmission. La roue 9 présente sur sa périphérie un ensemble de dents 9a, qui coopère avec un doigt de blocage (non représenté) pivotant, qui peut s'engager entre deux dents 9a consécut ives, pour immobiliser les roues motrices.

Sur la figure 1, on voit que le pignon d'attaque 7 de la couronne de différentiel 3 est disposé à l'intérieur des roulements 11 de l'arbre 8 portant ce pignon (arbre secondaire de la boîte), alors que sur la figure 2, il est disposé à l'extérieur des roulement s 11. Cette seconde disposit ion impose l'ajout d'une pièce supplémentaire dans la boîte, telle qu'un couvercle interne 12 fixé sur le carter d'embrayage 6, pour porter les roulements 11 de l'arbre 8. Elle présente l'avantage de libérer au dessus de l'axe du différentiel un espace libre 13, qui n'apparaît pas sur la figure 1. L'espace 13 peut avantageusement être occupé par une partie du mécanisme de commande (non représenté) du doigt pivotant, ce qui permet de diminuer l'encombrement ef f ect if du mécanisme dans la boîte.

Conformément à l'invention, la denture de la roue de parking 9 peut être réalisée par forgeage dans la couronne de différentiel 3. Cette intégration per met de supprimer plusieurs pièces séparées, dont la roue dentée elle-même, mais aussi ses éléments de fixation habituels de fixation (vis, clips etc.) sur une partie tournante de la transmission. Par ailleurs, par rapport à l'intégration de la roue dent ée dans le boîtier lui-même, la solution proposée présente l'avantage de pouvoir conserver le même boîtier pour des applications différentes, puisque celui-ci est susceptible de recevoir des couronnes de dimensions diverses, selon les caractéristiques des transmissions où il est utilisé.

La couronne peut être usinée après le forgeage de la roue de parking pour obtenir une meilleure finition des dents si celle-ci est souhaitée. Les opérations d'usinage incluent alors de préférence le perçage des trous de fixation de la couronne sur le boîtier de différentiel, et le cent rage de la couronne sur le boîtier. Enfin, les trous de f ixat ion de la couronne sur le boîtier peuvent déboucher dans les creux entre les dents 9a de la roue de parking 9.

En conclusion, l'invention présente de nombreux avantages par rapport aux solutions connues de l'art antériéur, dont sa facilité de mise en oeuvre, puisqu'il est plus simple de forger une couronne de différentiel que le boîtier de différentiel lui-même, et que le simple forgeage des dents de la roue dentée dans la masse de la couronne de différentiel peut assurer une précision suffisante des dents de la roue de parking pour la f onct ion qui lui est demandée.

## Revendications

1. Dispositif de verrouillage d'une transmission de véhicule comportant une roue de parking dentée (9) reliée aux roues motrices du véhicule par un élément de la transmission, et un doigt de blocage pivotant pouvant s'engager entre deux dents consécutives (9a) de la roue de parking pour immobiliser les roues motrices par l'intermédiaire de celle-ci, **caractérisé en ce que** la denture de la roue de parking (9) est forgée dans la masse de la couronne (3) du différentiel de la transmission, qui est distincte du boîtier de différentiel et fixée sur ce dernier.

2. Transmission de véhicule comprenant un dispositif de verrouillage selon la revendication 1, **caractérisée en ce que** le pignon d'attaque (7) de la couronne de différentiel (3) est monté à l'intérieur des roulements (11) de l'arbre (8) portant ce pignon.

3. Transmission de véhicule comprenant un dispositif de verrouillage selon la revendication 1, **caractérisé en ce que** le pignon d'attaque (7) de la couronne de différentiel (3) est monté à l'extérieur des roulements (11) de l'arbre (8) portant ce pignon.

4. Transmission selon la revendication 3, **caractérisée en ce que** les roulements (11) sont montés sur un couvercle interne (12) porte roulements.

5. Transmission selon la revendication 4, **caractérisée en ce que** le couvercle interne (12) est fixé sur le carter d'embrayage (6).

6. Transmission selon l'une des revendications 2 à 5, **caractérisée en ce qu'**elle présente au moins deux arbres parallèles supportant une pluralité de pignons.

7. Transmission selon l'une des revendications 2 à 6, **caractérisée en ce qu'**elle présente au moins deux arbres primaires concentriques, et un arbre secondaire portant un pignon d'attaque (7) de la couronne de différentiel (3).

8. Procédé de fabrication d'une roue de parking dentée de verrouillage de transmission, **caractérisé en ce que** la denture de la roue de parking (9) est forgée dans la masse d'une couronne de différentiel (3) de la transmission distincte du boîtier de différentiel, avant que la couronne soit fixée sur le boîtier.

9. Procédé de fabrication selon la revendication 8, **caractérisé en ce que** la couronne (3) est usinée après le forgeage de la roue de parking pour assurer la finition des dents.

10. Procédé de fabrication selon la revendication 9, **caractérisé en ce que** les opérations d'usinage de la couronne incluent le perçage des trous de fixation de la couronne sur le boîtier de différentiel (1) et le centrage de la couronne (3) sur le boîtier (1).

## Claims

1. Device for locking a vehicle transmission comprising a toothed parking wheel (9) connected to the vehicle drive wheels by an element of the transmission, and a pivoting locking pawl which can engage between two consecutive teeth (9a) of the parking wheel so as to immobilize the drive wheels via said parking wheel, **characterized in that** the parking wheel (9) is forged into the mass of the differential ring gear (3) of the transmission, which ring gear is separate from the differential casing and fastened to the latter.

2. Vehicle transmission comprising a locking device according to Claim 1, **characterized in that** the input pinion (7) of the differential ring gear (3) is mounted inside the bearings (11) of the shaft (8) which carries this pinion.

3. Vehicle transmission comprising a locking device according to Claim 1, **characterized in that** the input pinion (7) of the differential ring gear (3) is mounted outside the bearings (11) of the shaft (8) which carries this pinion.

4. Transmission according to Claim 3, **characterized in that** the bearings (11) are mounted on an internal bearing-carrying cover (12).

5. Transmission according to Claim 4, **characterized in that** the internal cover (12) is fastened to the clutch housing (6).

6. Transmission according to one of Claims 2 to 5, **characterized in that** it has at least two parallel shafts supporting a plurality of pinions.

7. Transmission according to one of Claims 2 to 6, **characterized in that** it has at least two concentric primary shafts, and a secondary shaft carrying an input pinion (7) of the differential ring gear (3).

8. Method of manufacturing a transmission-locking toothed parking wheel, **characterized in that** the toothing of the parking wheel (9) is forged into the mass of a differential ring gear (3) of the transmission that is separate from the differential casing, before the ring gear is fastened to the casing.

9. Manufacturing method according to Claim 8, **characterized in that** the ring gear (3) is machined following the forging of the parking wheel in order to finish the teeth.

10. Manufacturing method according to Claim 9, **characterized in that** the ring gear machining operations include the drilling of the holes for fastening the ring gear to the differential casing (1) and the centring of the ring gear (3) on the casing (1).

## Patentansprüche

1. Vorrichtung zum Sperren eines Fahrzeuggetriebes, mit einem Parkzahnrad (9), das durch ein Getriebeelement mit den Antriebsrädern des Fahrzeugs verbunden ist, und einer schwenkbaren Sperrklinke, die zwischen zwei aufeinander folgenden Zähnen (9a) des Parkrads eingreifen kann, um die Antriebsräder über das Parkrad festzulegen, **dadurch gekennzeichnet, dass** die Verzahnung des Parkrads (9) in die Masse des Tellerrads (3) des Differenzials des Getriebes geschmiedet ist, das von dem Differenzialgehäuse getrennt und an letzterem befestigt ist.

2. Fahrzeuggetriebe mit einer Sperrvorrichtung nach Anspruch 1, **dadurch gekennzeichnet, dass** das Eingangsritzel (7) des Differenzial-Tellerrads (3) innerhalb der Lager (11) der dieses Ritzel tragenden Welle (8) angebracht ist.

3. Fahrzeuggetriebe mit einer Sperrvorrichtung nach Anspruch 1, **dadurch gekennzeichnet, dass** das Eingangsritzel (7) des Differenzial-Tellerrads (3) außerhalb der Lager (11) der dieses Ritzel tragenden Welle (8) angebracht ist.

4. Fahrzeuggetriebe nach Anspruch 3, **dadurch gekennzeichnet, dass** die Lager (11) an einem inneren Lagertragdeckel (12) angebracht sind.

5. Getriebe nach Anspruch 4, **dadurch gekennzeichnet, dass** der innere Deckel (12) an dem Kupplungsgehäuse (6) befestigt ist.

6. Getriebe nach einem der Ansprüche 2 bis 5, **dadurch gekennzeichnet, dass** es mindestens zwei parallele Wellen aufweist, die mehrere Ritzel tragen.

7. Getriebe nach einem der Ansprüche 2 bis 6, **dadurch gekennzeichnet, dass** es mindestens zwei konzentrische Primärwellen und eine Sekundärwelle, die ein Eingangsritzel (7) des Differenzial-Tellerrads (3) trägt, aufweist.

8. Verfahren zur Herstellung eines Getriebesperr-Parkzahnrads, **dadurch gekennzeichnet, dass** die Verzahnung des Parkrads (9) in die Masse eines Differenzial-Tellerrads (3) des Getriebes geschmiedet wird, das von dem Differenzialgehäuse getrennt ist, bevor das Tellerrad an dem Gehäuse befestigt wird.

9. Herstellungsverfahren nach Anspruch 8, **dadurch gekennzeichnet, dass** das Tellerrad (3) nach dem Schmieden des Parkrads bearbeitet wird, um die Fertigbearbeitung der Zähne zu gewährleisten.

10. Herstellungsverfahren nach Anspruch 9, **dadurch gekennzeichnet, dass** die Tellerrad-Bearbeitungsvorgänge das Bohren von Löchern zur Befestigung des Tellerrads an das Differentialgehäuse (1) und das Zentrieren des Tellerrads (3) auf das Gehäuse (1) enthalten.
